# EUROPEAN PATENT SPECIFICATION

(11) **EP 3 066 731 B1**
(45) Date of publication and mention of the grant of the patent: **12.12.2018**
(21) Application number: 14795879.7
(22) Date of filing: 15.10.2014
(51) Int. Cl.: H02G 3/04, H02G 3/06

(54) **MULTI-DIRECTIONAL CABLE ROUTE**
MULTIDIREKTIONALE KABELFÜHRUNG
CHEMIN DE CÂBLES MULTIDIRECTIONNEL

(30) Priority: 05.11.2013 PL 40593013
(43) Date of publication of application: 14.09.2016
(73) Proprietor: Sielski, Kazimierz, 05-480 Karczew (PL)
(72) Inventor: Sielski, Kazimierz, 05-480 Karczew (PL)
(74) Representative: Slominska-Dziubek, Anna
(86) International application number: PCT/PL2014/050065
(87) International publication number: WO 2015/069127

(56) References cited:
- EP-A1- 2 518 845
- EP-A2- 1 675 231
- AU-A4- 2011 100 502
- FR-A1- 2 437 720
- US-A- 4 232 845

## Description

The invention relates to a multi-directional cable route constructed of straight and arched cable racks, fasteners, platforms used to descend the cables out of the cable route, and covers for covering the cable racks.

Patent EP 1675231 describes a device constructed of cable trays forming a cable transmission route. Individual cable trays of identical shape at one end are equipped with plug connector elements having flat plugs and recesses and on the other end the cable trays are provided with the catch and latching elements for connecting the front portion of one of the cable trays to the rear portion of another cable tray. The trays are additionally connected to each other by means of an independent elastic element provided with clamps. The recesses, plugs and catches provided at the front and back of the cable tray complement each other, allowing the cable trays to be combined in a series to form cable routes.

Australian patent AU 2011100502 (A4) describes a cable rack having the function of a line rack. The cable rack consists of straight elements coupled by means of articulated connectors. The inclination of one straight element relative to the other straight element is adjusted by means of the articulated connector. The articulated connector is equipped with a locking member allowing the cable racks to be permanently arranged relative to each other at any angle.

In the description of the Polish patent application P.391905, published in the Polish Patent office Bulletin No 3/2012, a quick-installation cable route constructed of connectable cable trays is presented. The cable trays are provided with guide rails in the front portion of their side walls, below the guide rails locking catches are provided and above the catches cut-outs are made. At their rear portion the cable trays have tongues with openings and with holders bent outwardly. In the bottom of the cable trays openings and embossments are made for locking the connections.

The description of the Polish patent application P.404637 presents a stable cable route equipped with cable trays with front and rear connecting sections of different design. The cable trays have locking catches in the shape of a hook above which guide rails are arranged and the guide rails are separated by an opening and around the locking catches holes are made for mounting screws. The rear connecting sections of the cable tray are equipped with tongues having openings covered with protrusions. Mounting holes are made around the tongues.

Polish utility model application W.122375 describes a cable rack, whose inner connecting sections are provided with leading protrusions at the top and below the leading protrusions there is a tongue with a hook-shaped catch. Openings are made in the lower corners of the inner connecting sections. There are external connecting sections, the upper portion of each external fastener is provided with cut-outs and below the cut-outs there is a rectangular opening for the hook-shaped catch and the lower portion of each external connecting section is provided with leading protrusions.

Polish utility model Ru 59584 describes a cable rack constructed of two U-shaped stringers coupled with crossbars having openings. The cable rack crossbars are coupled to stringers provided with profiled reinforcing edges by means of fasteners passing through two adjacent ellipse-shaped openings in the stringers.

Polish utility model Ru 66884 describes a connector for branching of cable trays and cable racks. The connector is a flanged angle element. A slot is made in the angle element and elongated openings, parallel to each other, are made on both sides of the slot to facilitate the bending of the angle bar wall.

Polish utility model Ru 66344 describes a platform used to descend the cables out of a cable route. The platform is provided with a locking catch for larger-sized crossbars at one end, whereas at the other end it has a locking catch adapted to smaller-sized crossbars. The longitudinal edges of the arched platform have reinforcing embossments. The arched platform is provided with mounting holes for fixing the cables.

The aim of the invention is to provide a multi -directional cable route constructed of cable racks allowing the cable racks to be arranged at any angle, used for fast and stable branching of its elements to any length, while ensuring electrical continuity and high strength performance of the connected cable racks.

A multi -directional cable route according to the present invention comprising of straight cable racks having connecting sections and arched cable racks, connected by means of articulated connectors, straight connectors and angle connectors, the multi - directional cable route being equipped with covers and platforms for descending cables out of the cable racks and at their inner connecting sections the slide-in straight racks are equipped with leading protrusions, whereas at their external connecting sections the slide-in straight racks have cut-outs for the leading protrusions and **characterized in that** the inner connecting sections are equipped with openings for catches and holes for mounting screws provided between the leading protrusions and the openings, that the external connecting sections have tongues with catches and mounting holes provided between the tongues and cut-outs.

The articulated connectors have two identical wings with flanges and holes and the wings are connected to each other by means of a pin. Apertures are made around the pin.

The straight connectors have rectangular holes and oval mounting holes.

The multi -directional cable route is illustrated in detail in an exemplary embodiment in the drawings, in which:

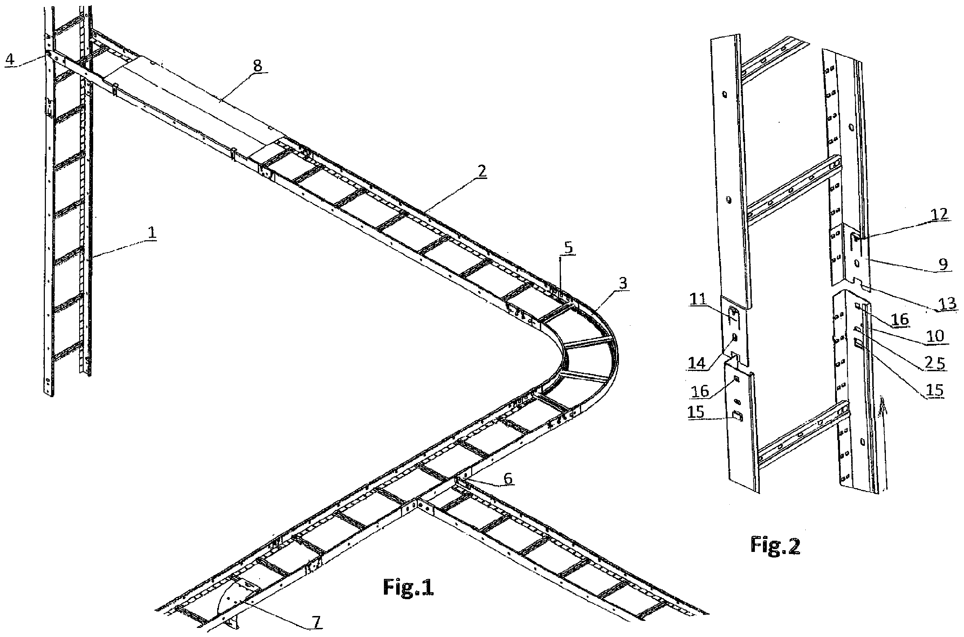

fig. 1 presents an axonometric view of a multi directional cable route,
fig. 2 presents slide -in straight cable racks during connection,

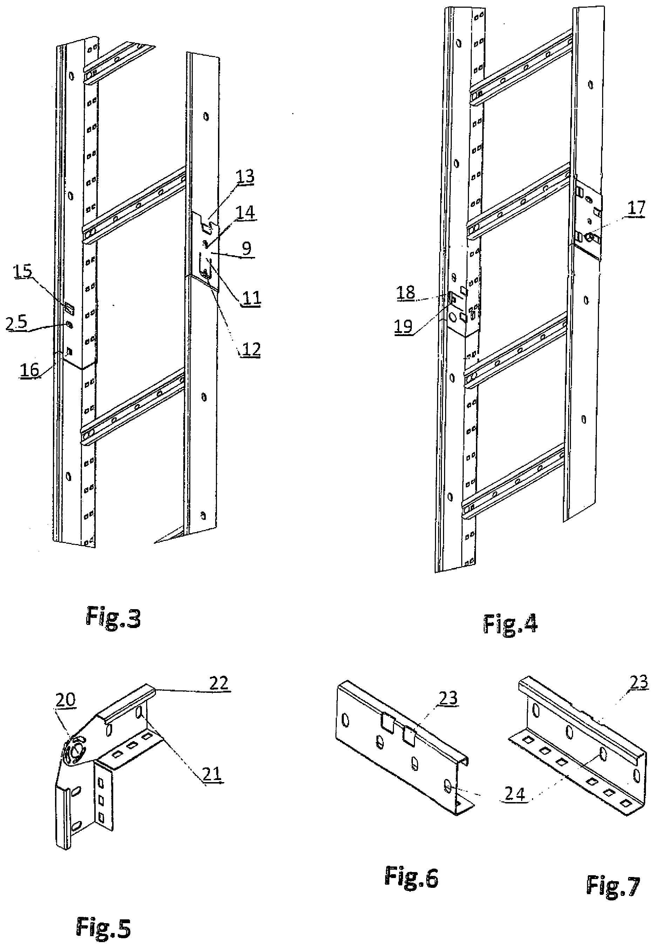

fig. 3 presents slide -in straight cable racks after connection,
fig. 4 presents superimposable straight cable racks after connection,
fig. 5 presents an articulated connector,
fig. 6 presents an outside view of a straight connector,
fig. 7 presents an inside view of a straight connector.

The multi-directional cable route is constructed of slide-in straight cable racks 1, superimposable straight cable racks 2, arched racks 3, articulated connectors 4 used for changing the angle of the cable route's position, straight connectors 5, angled connectors 6 used for branching cable routes, covers 8, and platforms 7 used to descend cables out of the cable racks.

The slide-in straight cable racks 1 have external connecting sections 9 equipped with tongues 11 having catches 12, and cut-outs 13, and the slide-in straight cable racks 1 have inner connecting sections 10 comprising leading protrusions 15 and openings 16 for the catches 12. Between the tongues 11 and cut-outs 13 there are provided holes 14 for mounting screws, and between the leading protrusions 15 and the openings 16 there are holes 25 for mounting screws.

The superimposable straight cable racks 2 have external connecting sections with cut-outs for catches 17 provided in the inner connecting sections of the superimposable straight cable racks 2, whereas the inner connecting sections have tongues 18 with catches 19 which are received in the openings provided in the external connecting sections.

When changing the horizontal direction of the cable route the slide-in straight cable racks 1 are coupled to superimposable straight cable racks 2 by means of the articulated connectors 4, each equipped with two identical wings coupled by a pin 20 and having flanges 22 and holes 21. Apertures for adjusting the inclination angle of the cable racks to be connected are made around the pin 20.

The superimposable straight racks 2 are coupled to the arched racks 3 by means of the straight connectors 5 having rectangular cut-outs 23 and oval mounting holes 24.

The angled connectors 6 of the multi directional cable route are used for branching of the cable route by adding the cable racks in perpendicular direction. The platforms 7 are connected to the cable racks in order to descent the cables from the cable rack. The covers 8 fastened with clasps are used to cover the straight cable racks.

## Claims

1. A multi- directional cable route comprising slide- in straight cable racks equipped with connecting sections and superimposable straight cable racks equipped with connecting sections and arched cable racks, the multidirectional cable route being equipped with connectors, platforms and covers and at their inner connecting sections (10) the slide- in straight racks (1) are equipped with leading protrusions (15), whereas at their external connecting sections (9) the slide- in straight racks (1) have cut- outs (13) for the leading protrusions (15) **characterized in that** the inner connecting sections are equipped with openings (16) for catches (12) and holes (25) for mounting screws provided between the leading protrusions (15) and the openings (16), that the external connecting sections have tongues (11) with catches (12) and mounting holes (14) provided between the tongues (11) and cut- outs (13).

2. The cable route according to claim 1 **characterized in that** articulated connectors have identical wings provided with holes (21) and connected to each other by means of a pin (20), wherein the wings are equipped with flanges (22) and around the pin there are made apertures.

3. The cable route according to claim 1 **characterized in that** straight connectors having rectangular cut-outs (23) and oval mounting holes (24).

## Patentansprüche

1. Multidirektionale Kabelführung umfassend gerade einschiebbare Kabelleiter mit Verbindungsbereichen und gerade aufsteckbare Kabelleiter mit Verbindungsbereichen sowie bogenförmige Kabelleiter, mit Verbindern, Bühnen und Deckeln, wobei die geraden einschiebbaren Kabelleiter (1) an ihren innenseitigen Verbindungsbereichen (10) mit Führungsvorsprüngen (15) und an ihren aussenseitigen Verbindungsbereichen (9) mit Aussparungen (13) für die Führungsvorsprünge (15) versehen sind, **dadurch gekennzeichnet, dass** die innenseitigen Verbindungsbereiche mit Öffnungen (16) für Haken (12) sowie zwischen den Führungsvorsprüngen (15) und den Öffnungen (16) angeordneten Löchern (25) für Montageschrauben versehen sind, während die aussenseitigen Verbindungsbereiche Zungen (11) mit Haken (12) und zwischen den Zungen (11) und Aussparungen (13) angeordnete Montageöffnungen aufweisen.

2. Kabelführung nach Anspruch 1, **dadurch gekennzeichnet, dass** die Gelenkverbinder jeweils identische miteinander durch einen Bolzen (20) verbundene Fügel mit Löchern (21) aufweisen, wobei die Flügel mit Schenkeln (22) versehen sind und um den Bolzen herum Öffnungen eingebracht sind.

3. Kabelführung nach Anspruch 1, **dadurch gekennzeichnet, dass** die Längsverbinder rechteckige Löcher (23) sowie ovale Montageöffnungen (24) aufweisen.

## Revendications

1. Chemin de câbles multidirectionnel construit d'échelles à câbles droites insérées et d'échelles à câbles droites superposées avec des joints, ainsi que d'échelles à câbles arquées, équipé de raccords, plate-formes et de couvercles, et sur leurs joints internes (10) les échelles à câbles droites insérées (1) sont équipées des ergots d'acheminement (15), alors que sur leurs joints externes (9) les échelles à câbles droites insérées (1) présentent des entailles (13) pour recevoir les ergots d'acheminement (15), **caractérisé en se que** les joints internes sont équipés d'orifices (16) recevant les crans (12) ainsi que d'orifices (25) pour les vis d'assemblage situés entre les ergots d'acheminement (15) et les orifices (16), tandis que les joints externes présentent des languettes (11) avec des crans (12) et des orifices pour l'assemblage situés entre les languettes (11) et les entailles (13).

2. Chemin selon la revendication 1, **caractérisé en se que** les raccords articulés possèdent des ailes identiques équipées des orifices (21) liées les uns avec les autres par un mandrin (20), les ailes étant pourvues des rebords (22), et autour du mandrin sont réalisés des orifices.

3. Chemin selon la revendication 1, **caractérisé en se que** les raccords droits possèdent des orifices rectangulaires (23) ainsi que des orifices ovales pour l'assemblage (24).
